Europäisches Patentamt

European Patent Office

Office européen des brevets

(19)

(11) Publication number:

**0 157 453**
**B1**

(12)

# EUROPEAN PATENT SPECIFICATION

(45) Date of publication of patent specification: **07.09.88**

(51) Int. Cl.⁴: **A 01 D 34/73, A 01 D 43/10**

(21) Application number: **85200418.3**

(22) Date of filing: **19.03.85**

(54) **Rotary cutter mechanism.**

(30) Priority: **23.03.84 US 592643**

(43) Date of publication of application:
**09.10.85 Bulletin 85/41**

(45) Publication of the grant of the patent:
**07.09.88 Bulletin 88/36**

(84) Designated Contracting States:
**DE FR GB**

(56) References cited:
**DE-A-1 936 054**
**DE-A-2 131 598**
**FR-A-1 480 616**
**FR-A-2 072 365**
**FR-A-2 390 082**
**FR-A-2 452 237**

(73) Proprietor: **FORD NEW HOLLAND, INC. (a Delaware corp.)**
**500 Diller Avenue**
**New Holland Pennsylvania 17557 (US)**

(72) Inventor: **Ehrhart, Philip J.**
**Route 2**
**Narvon, PA 17517 (US)**
Inventor: **Makofka, Stanley J.**
**Route 3**
**New Holland, PA 17557 (US)**
Inventor: **McLean, Kenneth W.**
**344 East Conestoga Street**
**New Holland, PA 17557 (US)**

(74) Representative: **Vandenbroucke, Alberic T.J.**
**FORD NEW HOLLAND N.V. Leon Claeysstraat 3A**
**B-8210 Zedelgem (BE)**

EP 0 157 453 B1

Courier Press, Leamington Spa, England.

## Description

The present invention relates generally to bottom driven rotary cutting mechanisms of the type as shown in e.g. FR—A—1.480.616, and more particularly, to an improved disc cutter member of such rotary cutting mechanisms. The present invention is particularly useful when the rotary cutting mechanism according to the instant invention is incorporated in a mower-conditioner.

Mower-conditioners have been provided for a number of years to sever standing crop material and convey the severed crop material rearwardly into a conditioning mechanism without depositing the severed crop upon the ground. A disc mower-conditioner utilizes a disc cutterbar having a number of transversely spaced disc cutter members rotatable to sever standing crop material by an impact action. A conditioning mechanism is mounted rearwardly of the disc cutterbar to receive the severed crop material directly from the disc cutter members without the need of an intermediate crop conveying mechanism.

It has been found that certain crops, such as oats, rye, bluegrass and sorghum-sudan hybrids, when harvested by a disc mower-conditioner, have a tendency for severed crop material to build up in front of the disc cutter members after being severed, resulting in a laying down of uncut crop material before it can be severed by the disc cutter members. Under these conditions, the crop material being cut leaves a long stubble. In addition, certain crops have a tendency to feed under the lower conditioning roll after being severed and, thereby, escape the conditioning treatment. Assistance in feeding severed crop into the conditioning mechanism is desirable. Furthermore, the rapid rotation of the disc cutter members creates a high rate of wear under abrasive crop and/or soil conditions, subjecting the hardware detachably connecting the knives to the disc cutter members to a great amount of wear, requiring frequent replacement of the knife fastening hardware.

Rotary cutting mechanisms hampered with these drawbacks are shown in FR—A—1.480.616 and FR—A—2.072.365.

The addition of crop lifters to presently existing disc cutter members to solve the above-noted problems can create problems of their own. The additional weight of the crop lifters causes operational problems with the bearings rotatably supporting the individual disc cutter members, particularly if the crop lifters are not properly balanced about the axis of rotation. Furthermore, means for attaching the crop lifters to the disc cutter members must be provided, adding still further weight thereto. On the other hand, if the lifters are welded onto the disc cutter members, they cannot be utilized at a counter-rotating position, unless further lifters are welded thereon, resulting in limited utilization of the disc cutter members.

It is therefore an objective of the present invention to provide a rotary cutting mechanism which, in operation, continuously lifts crop material away from the cutting zone immediately after being severed, thus preventing a build-up of severed crop material in front of the cutter members hindering the proper severing of further standing crop material on the one hand, while simultaneously protecting the knife fastening hardware and the bearings rotatably supporting the individual cutter members from excessive wear on the other hand. In the event that the cutting mechanism is incorporated in a disc mower-conditioner, it is furthermore also the objective to improve the feeding characteristics of severed crop material from the disc cutterbar to the rearwardly mounted conditioning mechanism without the utilization of an intermediate crop conveying mechanism.

According to the invention a rotary cutting mechanism is provided which is adapted for forward movement over the ground and which has at least one bottom driven disc cutter member supported, in operation, adjacent the ground and mounted for rotation about a generally vertical axis and provided with at least two knives for, upon rotation, severing standing crop material by impact; said disc cutter member comprising:

a raised central portion defining an upper plane extending, when the cutting mechanism is in the operative position, generally parallel to the ground,

peripheral portions extending from said raised central portion and terminating in circumferential peripheral edges; and

generally radially outwardly extending trench-like knife mounting portions disposed adjacent to and inwardly of said peripheral edges; each said knife mounting portion being defined between, on the one hand, a bottom wall member to the outermost end portion of which a corresponding knife is connected and, on the other hand, generally vertical wall members extending upwardly from said bottom wall member at circumferentially opposing sides thereof and terminating in elevated, generally radially extending edges; said bottom wall members of said knife mounting portions defining a lower plane spaced below said upper plane and a section of the peripheral portions immediately adjacent to at least one side of each knife mounting portion sloping downwardly away from each said knife mounting portion.

The rotary cutting mechanism is characterized in that:

said elevated, generally radially extending edges are disposed in substantially the same upper plane as said raised central portion and

the peripheral edges of the peripheral portions slope downwardly away from the outermost ends of the respective elevated edges at the circumferentially opposing sides of the knife mounting portions thus defining, between respective elevated edges, peripheral edges and the raised central portion, inclined ramps integrally formed

within the cutter member; pairs of oppositely inclined ramps forming therebetween depressed sections positioned substantially circumferentially midway between corresponding pairs of knife mounting portions.

According to another aspect of the invention a disc mower-conditioner is provided having a disc cutterbar with transversely spaced rotatable cutter members to sever standing crop material by an impact action and a rotatable conditioning mechanism mounted rearwardly of the cutterbar to receive and condition severed crop material and wherein each disc cutter member is provided with crop lifting ramp portions adjacent the peripheral edge of the disc cutter and proximate to each knife in both leading and trailing relation thereto. The inclined ramp portions are operable to lift previously severed crop material away from the corresponding knife before the knife severs fresh standing crop material and to feed the severed crop material into the conditioning mechanism. The inclined ramp portions are provided on both sides of the knives to permit the disc cutter member to be rotatable in either clockwise or counterclockwise direction and still provide a leading crop lifting action. The leading inclined ramp portions can be provided with replaceable wear members to extend the operative life of the disc cutter member.

According to the invention, the cutter member thus has inclined crop lifting ramps integrally formed therein and has built in wear protection for the knife mounting hardware without additional weight being added thereto and without unbalancing the cutter member for rotation about the axis of rotation. The cutter member can be rotated to provide a crop lifting function in either clockwise or counterclockwise direction and does not leave a long stubble of the severed crop material.

The disc cutter members according to the invention improve the feeding of severed crop material to the conditioning mechanism in a disc mower-conditioner and thus the harvesting efficiency of a disc mower-conditioner is increased.

The disc cutter member can be equipped with wear plates covering the leading ramp portions. Said wear plates may be detachably affixed to the cutter member.

The invention thus provides a disc cutter member having integrally formed ramp portions for a rotary cutting mechanism such as used in a disc mower or disc mower-conditioner and that is lightweight, has a long operative life, is inexpensive of manufacture, carefree of maintenance, facile in assemblage and simple and effective in use.

The advantages of this invention will become apparent upon consideration of the following detailed disclosure of the invention, especially when taken in conjunction with the following drawings wherein:

Fig. 1 is a top plan view of a disc mower-conditioner incorporating the principles of the instant invention, a portion of the draft member being broken away;

Fig. 2 is a side elevational view of the disc mower-conditioner seen in Fig. 1 with portions being broken away to better show the environment of the invention;

Fig. 3 is a perspective view of a disc cutter member integrally incorporating crop lifting ramp portions;

Fig. 4 is an enlarged top plan view of the disc cutter member seen in Fig. 3; the position of one of the knives being shown in phantom;

Fig. 5 is a cross-sectional view of the disc cutter member seen in Fig. 4 taken along lines 5—5;

Fig. 6 is a perspective view of a disc cutter member similar to the view of Fig. 3 but with the ramp portions being equipped with replaceable wear members;

Fig. 7 is a top plan view of one of the wear members seen in Fig. 6;

Fig. 8 is a peripheral side elevational view of the wear member seen in Fig. 7, corresponding to lines 8—8;

Fig. 9 is a perspective view of a disc cutter member similar to the view seen in Fig. 6, but with the ramp portions being equipped with an alternative embodiment of a replaceable wear member;

Fig. 10 is a top plan view of the wear member seen in Fig. 9; and

Fig. 11 is a trailing side elevational view of the wear member corresponding to lines 11—11 of Fig. 10.

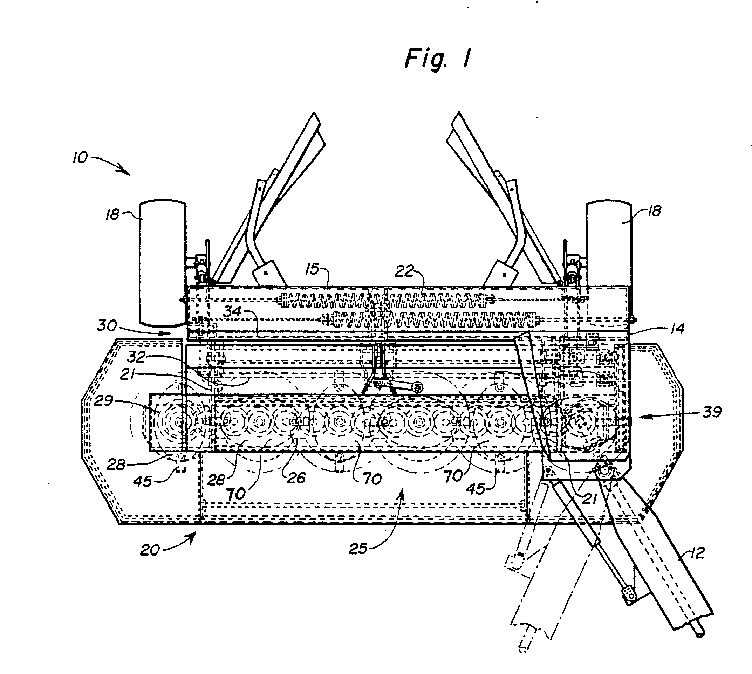

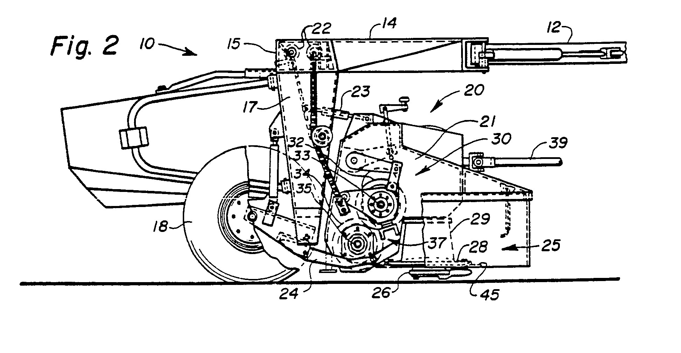

Referring now to the drawings, and particularly to Fig. 1, a top plan view of a hay harvesting machine, commonly referred to as a disc mower-conditioner can be seen. Any left and right references are used as a matter of convenience and are determined by standing at the rear of the mower-conditioner and facing in the direction of forward travel. The mower-conditioner 10 is shown in the form of a pull-type machine having a draft member 12 pivotably connected to the frame 14 of the machine 10. The frame 14 includes a main transverse support beam 15 to which are connected downwardly depending legs 17 mounting wheels 18 for mobilely supporting the machine 10 over the ground, as best seen in Fig. 2.

Referring to Figs. 1 and 2, the mower-conditioner 10 includes a crop harvesting header 20 floatingly supported for movement over the ground and relative to the frame 14 by the counter balancing mechanism 22 and upper and lower links 23, 24 interconnecting the header 20 and the frame 14. The header 20 is provided with a crop cutting mechanism 25, seen in the form of a disc cutterbar 26, such as a Kuhn three meter, six rotor rotary cutterbar, having a plurality of transversely spaced disc cutters 28 operable to sever standing crop material by an impact action. A conditioning mechanism 30 is mounted in the header 20 rearwardly of the cutting mechanism 25 to receive and condition crop material severed by the cutterbar 26.

The conditioning mechanism 30 included a pair of cooperable, generally vertically spaced transverse conditioning rolls 32, 34 operable to condition severed crop material passing therebetween. Each roll 32, 34 is rotatably supported between the header side sheets 21 such that the axis of rotation 33 of the upper conditioning roll 32 is spaced slightly forwardly of the axis of rotation 35 of the lower conditioning roll 34, so that the nip 37 formed therebetween is facing slightly downwardly toward the disc cutterbar 26. The preferred embodiment of the conditioning roll construction shown in Figs. 1 and 2 is of the intermeshing lug design. A conventional drive mechanism 39 provides a source of rotational power to both the disc cutterbar 26 and the conditioning mechanism 30.

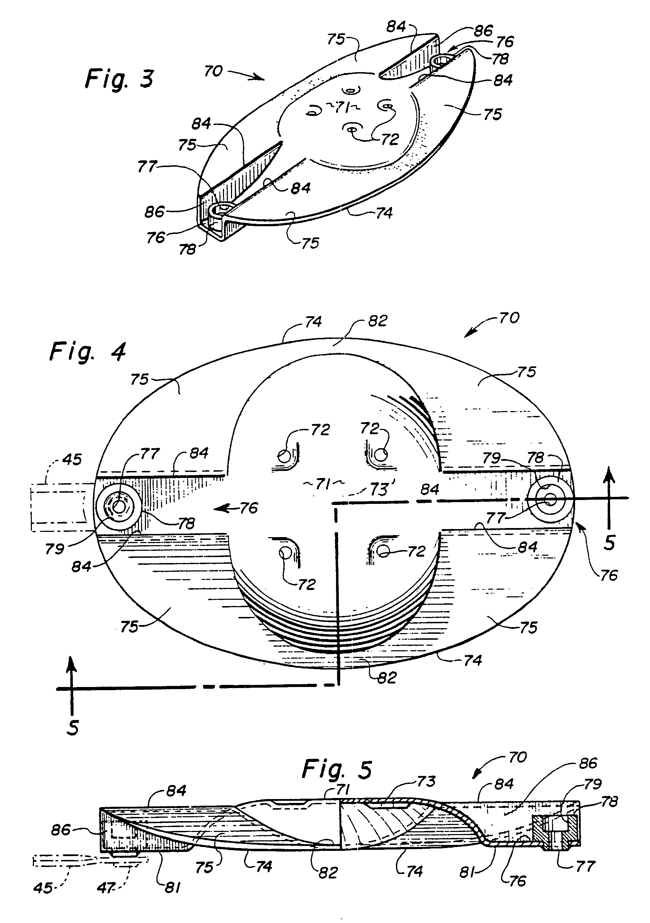

Referring now to Figs. 3—5, the disc cutters 28 can best be seen. Although the transversely opposed endmost disc cutters 28, as best seen in Figs. 1 and 2, are provided with a truncated cone 29 to provide a more aggressive crop conveying action, each of the remaining interior disc cutters 28 will have a construction as shown in Figs. 3—5. Each disc member 70 of the interior disc cutters 28 includes a raised central portion 71 in which are formed recessed mounting holes 72 for connection of the disc 70 to a driving member (not shown) in a conventional manner. The axis of rotation 73' of the disc member 70 is positioned in the center of the raised central portion 71. The oval-shaped disc member 70 is defined by a circumferential peripheral edge 74. Circumferentially opposed along the major axis of the oval-shaped disc member 70 are knife mounting holes 77 formed in lower trench-like portions 76 defining a bottom plane 81 of the disc member 70 disposed below an upper plane 73 defined by the raised central portion 71.

The knife mounting holes 77 are provided with protection collars 78 having a countersunk opening 79 formed therein to provide greater protection for the knife mounting hardware 47. Each disc member 70 is provided with a pair of diametrically opposed knives 45 detachable connected to the knife mounting portions 76 by fasteners. Upon rotation of the disc member 70, the knives 45 sever standing crop material by an impact action.

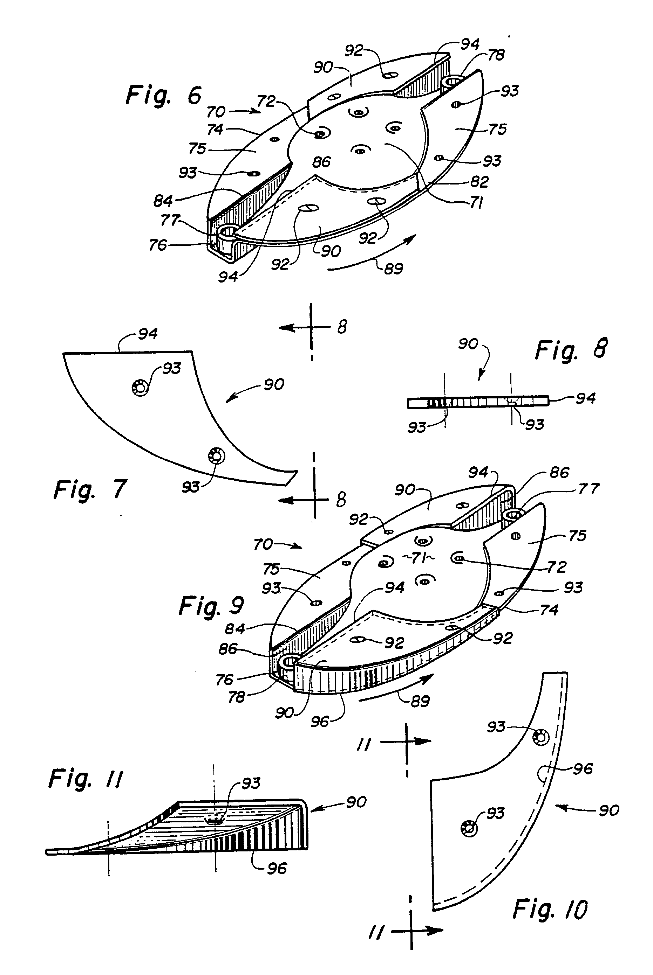

Each disc member 70 is provided with lower peripheral portions 82 at circumferentially opposed positions along the minor axis of the disc member 70. The lower peripheral portions 82 are displaced 90 degrees around the circumference 74 of the disc member 70 from the knife mounting holes 77. The lower peripheral portions 82 are positioned generally at the same level as the bottom plane 81 of the trench portions 76. From each lower peripheral portion 82, an inclined ramp 75 extends toward each knife mounting hole 77. Each inclined ramp 75 terminates in a raised trailing edge 84 extending to or near the level of the upper plane 73 defined by the raised central portion 71. The trailing edges 84 can be positioned slightly below the upper plane 73 to accommodate the attachment of wear plates 90, as will be described in further detail below with respect to Figs. 6—11. The vertical sides 86 extend from the trailing edges 84 downwardly to the bottom plane 81, thereby defining the sides of the trench portion 76, to lend additional protection to the knife mounting hardware 47.

The inclined ramps 75 provide a more or less aggressive lifting action to previously severed crop material to lift such material from the zones immediately trailing the cutting zones of the corresponding knives 45. This lifting action helps prevent severed crop material from passing beneath the conditioning mechanism 30 and also helps to feed the severed crop material into the nip 37 of the conditioning rolls 32, 34 to effect a conditioning thereof.

Since each disc member 70 is provided with four opposingly directed lifting ramps 75, one skilled in the art will readily realize that these disc members 70 can be mounted on the cutterbar 26 for rotation in either the clockwise or counterclockwise direction during operation. With the lifting ramps 75 extending for substantially an entire quadrant of the peripheral edge 74 of the disc members 70, the disc members 70 will impart a balanced lifting action to the severed crop material which still is sufficiently aggressive to clear the cutting paths for the associated knives 45.

As can be seen in Figs. 6—11, each disc member 70 can be provided with wear plates 90 affixed to the leading lifting ramps 75, when viewed in the direction of rotation indicated by the arrow 89. As best seen in Figs. 6—8, one embodiment of the wear plates 90 will comprise a pork-chop-shaped flat plate affixed to each leading lifting ramp 75 by fasteners 92 engaged with appropriate holes 94 formed in the lifting ramps 75. Since the leading ramps 75 will be subjected to the greatest amount of abrasive wear during operation of the disc members 70, the utilization of replaceable wear plates 90 will provide a greater economic and operative life for these disc members 70. As indicated above with respect to Fig. 5, the trailing edges 84 of the lifting ramps 75 position the resulting trailing edges 94 of the wear plates 75 in substantially the same plane 73 as the raised central portion 71 of the disc members 70.

An alternative embodiment of the wear plate 90 can be seen in Figs. 9—11. This wear plate 90 includes a generally vertically extending apron 96 positioned along the peripheral edge of the wear plate 90. The apron 96 would present a solid face to the severed crop material to be lifted by the ramps 75, upon rotation of the disc member 70 to prevent crop material and/or other debris from being jammed underneath the lifting ramp 75 and also to protect the vertical sides 86 of the trench portion 76 from abrasive wear.

Aspects of the rotary cutting mechanism described herein are claimed in the co-pending patent application EP—A—0.158.389.

**Claims**

1. A rotary cutting mechanism (25) adapted for forward movement over the ground and having at least one bottom driven disc cutter member (70) supported, in operation, adjacent the ground and mounted for rotation about a generally vertical axis (73') and provided with at least two knives (45) for, upon rotation, severing standing crop material by impact; said disc cutter member (70) comprising:

a raised central portion (71) defining an upper plane (73) extending, when the cutting mechanism (25) is in the operative position, generally parallel to the ground,

peripheral portions (75) extending from said raised central portion (71) and teminating in circumferential peripheral edges (74); and

generally radially outwardly extending trench-like knife mounting portions (76) disposed adjacent to and inwardly of said peripheral edges (74); each said knife mounting portion (76) being defined between, on the one hand, a bottom wall member to the outermost end portion of which a corresponding knife (45) is connected and, on the other hand, generally vertical wall members (86) extending upwardly from said bottom wall member at circumferentially opposing sides thereof and terminating in elevated, generally radially extending edges (84); said bottom wall members of said knife mounting portions (76) defining a lower plane (81) spaced below said upper plane (73), and a section of the peripheral portions (75) immediately adjacent to at least one side of each knife mounting portion (76) sloping downwardly away from each said knife mounting portion (76), and characterized in that:

said elevated, generally radially extending edges (84) are disposed in substantially the same upper plane (73) as said raised central portion (71) and

the peripheral edges (74) of the peripheral portions (75) slope downwardly away from the outermost ends of the respective elevated edges (84) at the circumferentially opposing sides of the knife mounting portions (76) thus defining, between respective elevated edges (84), peripheral edges (74) and the raised central portion (71), inclined ramps integrally formed within the cutter member (70); pairs of oppositely inclined ramps forming therebetween depressed sections (82) positioned substantially circumferentially midway between corresponding pairs of knife mounting portions (76).

2. A rotary cutting mechanism (25) according to claim 1 characterized in that the depressed sections (82) are positioned in substantially the same lower plane (81) defined by the bottom wall members of said knife mounting portions (76).

3. A rotary cutting mechanism (25) according to any of the preceding claims, characterized in that at least one cutter member (70) has first and second knife mounting portions (76) located at opposing sides of the raised central portion (71) and each inclined ramp extends over substantially a quadrant of the peripheral edges (74).

4. A rotary cutting mechanism (25) according to claim 3 characterized in that:

the circumferentially extending peripheral edges (74) generally define an oval-shaped disc cutter member (70) having major and minor axes;

the first and second knife mounting portions (76) are located along the major axis; and

corresponding pairs of oppositely inclined ramps form therebetween respectively first and second depressed sections (82) located along the minor axis.

5. A rotary cutting mechanism (25) according to any of the preceding claims characterized in that each inclined ramp in leading relationship with each respective knife mounting portion (76), when viewed in the direction of rotation (89) of the cutter member (70), is provided with a detachably mounted wear plate (90).

6. A rotary cutting mechanism (25) according to claim 5 characterized in that each wear plate (90) includes a generally vertically extending apron (96) terminating in a lower edge; said lower edge being at substantially the same level as the depressed sections (82) and the knife mounting portions (76).

7. A rotary cutting mechanism (25) according to claims 5 or 6 characterized in that the elevated edge (84) is positioned slightly below the level of the raised central portion (71) when the respective wear plate (90) is removed from the cutter member (70).

8. A rotary cutting mechanism (25) according to any of the preceding claims characterized in that each knife mounting portion (76) includes a collar (78) within which connecting hardware for detachably fastening a corresponding knife (45) can be positioned; said collar (78) having a height terminating below the level of the respective elevated edges (84) and being operable to protect said connecting hardware from abrasive wear.

9. A disc mower-conditioner (10) having a mobile frame (14) adapted for forward movement over the ground; a rotary cutting mechanism (25) supported by the frame (14) adjacent the ground; the rotary cutting mechanism (25) including a transverse cutterbar (26) rotatably mounting a plurality of transversely spaced cutter members (70) each having at least two knives (45) operable to sever standing crop material upon rotation of the cutter members (70); and crop conditioning means (30) mounted generally rearwardly of the rotary cutting mechanism (25) to condition crop material severed by the cutter members (70); characterized in that the cutting mechanism (25) is of the type as claimed in any of the preceding claims wherein the inclined ramps in leading relationship with respect to the respective knife mounting portions (76), when seen in the direction of rotation (89), are operable to life previously severed crop material away from the knives (45) before said knives (45) sever further standing crop material, and to assist in transferring severed crop material from the cutting mechanism (25) to the crop conditioning means (30).

**Patentansprüche**

1. Rotierende Schneidevorrichtung (25), die zur Vorwärtsbewegung über den Boden ausgebildet ist und zumindestens ein unteres angetriebenes Schniedscheibenelement (70) aufweist, das im Betrieb benachbart zum Boden gehalten und für eine Drehung um eine allgemein vertikale Achse (73') befestigt sowie mit zumindestens zwei Messern (45) versehen ist, um bei der Drehung stehendes Erntematerial durch Auftreffen abzuschneiden, wobei das Schneidscheibenelement (70) folgende Teile umfaßt:

einen erhöhten Mittelteil (71), der eine obere Ebene (73) definiert, die sich bei in Betriebstellung befindlicher Schneidevorrichtung (25) allgemein parallel zum Boden erstreckt,

Umfangsteile (75), die sich von dem erhöhten Mittelteil (71) aus erstrecken und in am Umfang verlaufenden Randkanten (74) enden, und

sich allgemein in Radialrichtung nach außen erstreckende rinnenförmige Messerbefestigungsteile (76), die benachbart zu und innerhalb der Randkanten (74) befestigt sind, wobei jeder Messerbefestigungsteil (76) einerseits von einem Bodenwandteil, an dessen äußerstem Endteil ein entsprechendes Messer (45) befestigt ist, und andererseits von allgemein vertikalen Wandteilen (86) umgrenzt ist, die sich von dem Bodenwandteil an in Umfangsrichtung entgegengesetzten Seiten nach oben erstrecken und in erhöhten, sich allgemein radial erstreckenden Kanten (84) enden, wobei die Bodenwandteile der Messerbefestigungsteile (76) eine untere Ebene (81) definieren, die mit Abstand unterhalb der oberen Ebene (73) angeordnet ist, und wobei ein Abschnitt der Randteile (75) unmittelbar benachbart zu zumindestens einer Seite jedes Messerbefestigungsteils (76) nach unten von dem Messerbefestigungsteil (76) fort geneigt ist, dadurch gekennzeichnet,

daß die erhöhten, sich allgemein in Radialrichtung erstreckenden Kanten (84) in wesentlichen in der gleichen oberen Ebene (73) wie der erhöhte Mittelteil (71) angeordnet sind, und

daß die Randkanten (74) der Umfangsteile (75) ausgehend von den äußersten Enden der jeweiligen erhöhten Kanten (84) an den in Umfangsrichtung gegenüberliegenden Seiten der Messerbefestigungsteile (76) nach unten hin geneigt sind, sodaß zwischen jeweiligen erhöhten Kanten (84), den Randkanten (74) und dem erhabenen Mittelteil (71) geneigte Rampen ausgebildet sind, die einstückig mit dem Schneidelement (70) ausgebildet sind, wobei Paare von entgegengesetzt geneigten Rampen zwischen sich vertiefte Teile (82) bilden, die im wesentlichen in Umfangsrichtung in der Mit\_ \_wischen entsprechenden Paaren von Messerbefestigungsteilen (76) angeordnet sind.

2. Rotierende Schneidevorrichtung (25) nach Anspruch 1, dadurch gekennzeichnet, daß die vertieften Abschnitte (82) in wesentlichen in der gleichen unteren Ebene (81) angeordnet sind, die durch die Bodenwandteile der Messerbefestigungsteile (76) definiert sind.

3. Rotierende Schneidevorrichtung (25) nach einem der vorhergehenden Ansprüche, dadurch gekennzeichnet, daß das zumindestens eine Schneidscheibenelement (70) erste und zweite Messerbefestigungsteile (76) aufweist, die auf gegenüberliegenden Seiten des erhöhten Mittelteils (71) angeordnet sind, und daß sich jede geneigte Rampe über im wesentlichen einen Quadranten der Randkanten (74) erstreckt.

4. Rotierende Schneidevorrichtung (25) nach Anspruch 3, dadurch gekennzeichnet,

daß die sich in Umfangsrichtung erstreckenden Randkanten (74) allgemein ein ovalförmiges Schneidscheibenelement (70) mit Haupt- und Nebenachsen definieren,

daß die ersten und zweiten Messerbefestigungsteile (76) entlang der Hauptachse angeordnet sind, und

daß entsprechende Paare von entgegengesetzt geneigten Rampen zwischen sich jeweils erste und zweite vertiefte Abschnitte (82) bilden, die entlang der kleineren Achse liegen.

5. Rotierende Schneidevorrichtung (25) nach einem der vorhergehenden Ansprüche, dadurch gekennzeichnet, daß jede geneigte Rampe, die in voreilender Beziehung - mit einem jeweiligen Messerbefestigungsteil (86) bei Betrachtung in Drehrichtung (89) des Schneidscheibenelements (70) angeordnet ist, mit einer lösbar befestigten Verschleißplatte (90) versehen ist.

6. Rotierende Schneidevorrichtung (25) nach Anspruch 5, dadurch gekennzeichnet, daß jede Verschleißplatte (90) eine sich allgemein vertikal erstreckende Schürze (96) einschließt, die in einer Unterkante endet, wobei diese Unterkante im wesentlichen in der gleichen Höhenlage wie die vertieften Abschnitte (62) und die Messerbefestigungsteile (76) liegt.

7. Rotierende Schneidervorrichtung (25) nach Anspruch 5 oder 6, dadurch gekennzeichnet, daß die erhöhte Kante (84) leicht unterhalb der Höhenlage des erhöhten Mittelteils (71) angeordnet ist, wenn die jeweilige Verschließplatte (90) von dem Schneidscheibenelement (70) entfernt ist.

8. Rotierende Schneidevorrichtung (25) nach einem der vorhergehenden Ansprüche, dadurch gekennzeichnet, daß jeder Messerbefestigungsteil (76) einen Bundring (78) einschließt, in dem Befestigungsmittel zur lösbaren Befestigung eines entsprechenden Messers (45) angeordnet werden können, und daß der Bundring (78) eine Höhe aufweist, die unterhalb der Höhenlage der jeweiligen erhöhten Kanten (84) endet und einen Schutz der Befestigungsmittel gegen Verschließ bildet.

9. Mäh- und Futteraufbereitungsvorrichtung (10) mit scheibenförmigen Schneidelementen, mit einem beweglichen Rahmen (14), der für eine Vorwärtsbewegung über den Boden ausgebildet ist, mit einer rotierenden Schneidevorrichtung (25), die von dem Rahmen (14) benachbart zum Boden gehalten ist, wobei die rotierende Schneidevorrichtung (25) einen sich in Querrichtung erstreckenden Schneidbalken (26) einschließt, der eine Vielzahl von in Querrichtung mit Abstand angeordneten Schneidelementen (70) drehbar haltert, von denen jedes zumindestens zwei Messer (45) aufweist, die zum Abtrennen stehenden Erntematerials bei einer Drehung der Schneidelemente betreibbar sind, und mit Futteraufbereitungseinrichtungen (30), die allgemein hinter der rotierenden Schneidevorrichtung (25) angeordnet sind, um von den Schneidelementen (70) geschnittenes Futtermaterial aufzubereiten, dadurch gekennzeichnet, daß die Schneidevorrichtung von der in einem der vorhergehenden Ansprüche genannten Art ist, wobei die geneigten Rampen, die bei Betrachtung in Drehrichtung (89) gegenüber den jeweiligen Messerbefestigungsteilen (76) voreilend angeordnet sind, derart betreibbar sind, daß sie vorher geschnittenes Erntematerial von den Messern (45) fort anheben, bevor die Messer (45) weiteres stehendes Erntematerial schneiden, und daß sie die Überführung geschnittenen Erntematerials von der Schneidevorrichtung (25) zu den Futtermittelaufbereitungseinrichtungen (30) unterstützen.

## Revendications

1. Mécanisme de coupe rotatif (25) apte à se déplacer vers l'avant au-dessus du sol et ayant au moins un organe de coupe en disque entraîné du dessous (70) supporté, en fonctionnement, à proximité du sol et monté en vue d'une rotation autour d'un axe dans l'ensemble vertical (73'), tout en étant pourvu d'au moins deux couteaux (45) pour, en rotation, couper des produits de récolte sur pied en les percutant, ledit organe de coupe en disque (70) comportant:

une partie centrale surélevée (71) définissant un plan supérieur (73) qui, lorsque le mécanisme de coupe (25) est dans la position de fonctionnement, s'étend, d'une manière générale, parallèlement au sol,

des parties périphériques (75) qui s'étendent depuis ladite partie centrale surélevée (71) et se terminent par des bords périphériques circonférentiels (74); et

des parties de montage de couteaux en forme de tranchées (76) qui s'étendent, d'une manière générale, radialement vers l'extérieur et sont disposées à proximité desdits bords périphériques (74) et à l'intérieur par rapport à ceux-ci; chacune desdites parties de montage de couteaux (96) étant définie entre, d'une part, un élément de paroi inférieur dont la partie d'extrémité située le plus à l'extérieur est accouplée avec un couteau (45) correspondant et, d'autre part, des éléments de paroi dans l'ensemble verticaux (86) qui s'étendent vers le haut depuis ledit élément de paroi inférieur, au niveau de côtés circonférentiellement opposés de celui-ci, et se terminent par des bords relevés (84) qui s'étendent, d'une manière générale, radialement; lesdits éléments de paroi inférieurs desdites parties de montage de couteaux (76) définissant un plan inférieur (81) situé à une certaine distance au-dessous dudit plan supérieur (73), tandis qu'une portion des parties périphériques (75) située an voisinage immédiat d'au moins un côté de chacune des parties de montage de couteaux (76) s'incline vers le bas en s'éloignant de celle-ci, et étant caractérisé en ce que:

lesdits bords relevés (84) qui s'étendent, d'une manière générale, radialement, sont disposés sensiblement dans le même plan supérieur (73) que ladite partie centrale surélevée (71), tandis que

les bords périphériques (74) des parties périphériques (75) s'inclinent vers le bas en s'éloignant des extrémités situées le plus à l'extérieur des bords relevés (84) respectifs, au niveau des côtés circonférentiellement opposés des parties de montage de couteaux (76), pour ainsi définir, entre des bords relevés (84) respectifs, des bords périphériques (74) et la partie centrale surélevée (71), des rampes inclinées formées solidairement à l'intérieur de l'organe de coupe (70); des paires de rampes inclinées opposées formant entre elles des portions surbaissées (82) situées sensiblement à mi-distance circonférentiellement, entre des paires correspondantes de parties de montage de couteaux (76).

2. Mécanisme de coupe rotatif (25) selon la revendication 1, caractérisé en ce que les portions surbaissées (82) sont situées sensiblement dans le même plan que le plan inférieur (81) défini par les éléments de paroi inférieurs desdites parties de montage de couteaux (76).

3. Mécanisme de coupe rotatif (25) selon l'une quelconque des revendications précédentes, caractérisé en ce que l'organe de coupe (70) possède des première et seconde parties de montage de couteaux (76) situées au niveau de côtés opposés de la partie centrale surélevée (71), chacune des rampes inclinées s'étendant sensiblement sur un quadrant des bords périphériques (74).

4. Mécanisme de coupe rotatif (25) selon la revendication 3, caractérisé en ce que:

les bords périphériques (74) qui s'étendent circonférentiellement définissent, d'une manière générale, un organe de coupe en disque de forme ovale (70) pourvu d'un grand axe et d'un second axe;

les première et seconde parties de montage de couteaux (76) sont situées le long du grand axe; et

des paires correspondantes de rampes inclinées opposées forment respectivement entre elles des première et seconde portions surbaissées (82) situées le long du second axe.

5. Mécanisme de coupe rotatif (25) selon l'une quelconque des revendications précédentes, caractérisé en ce que chacune des rampes inclinées en relation d'attaque avec les parties de montage de couteaux (76) respectives, est, lorsqu'on la considère dans le sens de rotation (89) de l'organe de coupe (70), munie d'une plaque d'usure (90) montée d'une manière détachable.

6. Mécanisme de coupe rotatif (25) selon la revendication 5, caractérisé en ce que chaque plaque d'usure (90) comporte un tablier (96) qui s'étend, d'une manière générale, verticalement et se termine par un bord inférieur; ledit bord inférieur étant sensiblement au même niveau que les portions surbaissées (82) et les parties de montage de couteaux (76).

7. Mécanisme de coupe rotatif (25) selon la revendication 5 ou 6, caractérisé en ce que, lorsque la plaque d'usure (90) correspondante est ôtée de l'organe de coupe (70), le bord relevé (84) est situé légèrement au-dessous du niveau de la partie centrale surélevée (71).

8. Mécanisme de coupe rotatif (25) selon l'une quelconque des revendications précédentes, caractérisé en ce que chacune des parties de montage de couteaux (76) comporte un collier (78) à l'intérieur duquel peuvent être placés des organes d'accouplement métalliques destinés à fixer un couteau (45) correspondant d'une manière détachable; ledit collier (78) ayant une hauteur qui culmine au-dessous du niveau des bords relevés (84) respectifs, et étant apte à opérer pour protéger lesdits organes d'accouplement métalliques contre une usure par frottement.

9. Faucheuse conditionneuse à disques (10) comportant un châssis mobile (14) apte à se déplacer vers l'avant au-dessus du sol; un mécanisme de coupe rotatif (25) supporté par le châssis (14) à proximité du sol; le mécanisme de coupe rotatif (25) comprenant une barre de coupe transversale (26) sur laquelle sont montés mobiles en rotation plusieurs organes de coupe espacés transversalement (70) dont chacun possède au moins deux couteaux (45) aptes à opérer pour, lors d'une rotation des organes de coupes (70), couper des produits de récolte sur pied; et des moyens conditionneurs de récolte (30) montés, d'une manière générale, en arrière du mécanisme de coupe rotatif (25) pour conditionner les produits de récolte coupés par les organes de coupe (70);

caractérisée en ce que le mécanisme de coupe (25) est du type défini dans l'une quelconque des revendications précédentes, dans laquel les rampes inclinées en relation d'attaque avec les parties de montage de couteaux (76) respectives sont, lorsqu'on les considère dans le sens de rotation (89), aptes à opérer pour soulever des produits de récolte coupés précédemment, afin de les écarter des couteaux (45) avant que lesdits couteaux (45) new coupent d'autres produits de récolte sur pied, et pour aider à transférer les produits de récolte coupés du mécanisme de coupe (25) aux moyens conditionneurs de récolte (30).

**0 157 453**

*Fig. 1*

Fig. 2

Fig. 3

Fig. 4

Fig. 5

Fig. 6

Fig. 7

Fig. 8

Fig. 9

Fig. 11

Fig. 10